# EUROPEAN PATENT SPECIFICATION

(11) **EP 2 157 338 B1**
(45) Date of publication and mention of the grant of the patent: **19.04.2017**
(21) Application number: 08752228.0
(22) Date of filing: 28.04.2008
(51) Int. Cl.: F16H 48/22, B60K 23/04, F16H 48/10, F16H 48/30

(54) **DRIVING FORCE CONTROL DEVICE FOR VEHICLE**
ANTRIEBSKRAFTSTEUERVORRICHTUNG FÜR FAHRZEUG
DISPOSITIF DE COMMANDE DE FORCE D'ENTRAINEMENT POUR VEHICULE

(30) Priority: 10.05.2007 JP 2007126021
(43) Date of publication of application: 24.02.2010
(73) Proprietor: TOYOTA JIDOSHA KABUSHIKI KAISHA, Toyota-shi, Aichi-ken, 471-8571 (JP)
(72) Inventor: IKUSHIMA, Yoshihiro, Toyota-shi, Aichi-ken, 471-8571 (JP); MIYAZAKI, Akifumi, Toyota-shi, Aichi-ken, 471-8571 (JP); YOKOO, Takami, Toyota-shi, Aichi-ken, 471-8571 (JP); KUROSAKI, Shin, Toyota-shi, Aichi-ken, 471-8571 (JP)
(74) Representative: D Young & Co LLP
(86) International application number: PCT/JP2008/058218
(87) International publication number: WO 2008/142963

(56) References cited:
- EP-A2- 1 582 390
- DE-A1- 19 742 575
- JP-A- 11 105 573
- JP-A- 2003 240 024
- JP-A- 2005 280 600
- JP-A- 2006 510 545
- US-A- 5 417 298

## Description

### TECHNICAL FIELD

The present invention relates to a drive force control apparatus for a vehicle configured to control transmitting of a drive force generated by a drive power source, to right and left drive wheels, more particularly, to improvement in responsiveness.

### BACKGROUND ART

There is known a drive force control apparatus for a vehicle, having at least one engaging element and configured to implement drive force control to control transmitting of the drive force generated by the drive power source, to the left and right drive wheels by controlling the engaged state of the at least one engaging element in accordance with a demand for control. For instance, it corresponds to the drive force distributing apparatus disclosed in the below Patent Literature 1. This technique permits it to distribute the drive force generated by the drive power source to the left and right drive wheels by the differential device constituted of at least one planetary gear set, and it includes a transmission mechanism in which a pair of planetary gear sets cooperates, coaxially disposed to the adjacent differential device, and a pair of clutches to selectively transmit the output from the transmission mechanism to the carrier and sun gear of the aforementioned differential device, and the drive force transmitted through the transmission mechanism to the sun gear or carrier to be distributed, by slippably engaging any of the pair of clutches if required. Thus, control of distribution of the torque transmitted to the left and right drive wheels can be preferably implemented upon such as turning of the vehicle.

Patent Literature 1: JP11-105573 A

The closest prior art document JP 11 105573 discusses a side wheels driving force distribution mechanism. EP 1 582 390 discusses a drive force control method for four-wheel drive vehicle. US 5 417 298 discusses a torque distribution control apparatus for vehicle. DE 197 42 575 discusses a driving torque distributor.

### SUMMARY OF INVENTION

### Technical Problem

However, the aforementioned conventional technique results in occurrence of a response delay when control of engaging elements is initiated after a real demand for control. Then, technique to improve theresponsivenesswas desired in the drive force control apparatus for the vehicle configured to control transmitting of the drive force generated by the drive power source to the left and right drive wheels.

It is therefore an object of the present invention to provide an improvement of the drive force control apparatus for the vehicle in responsiveness of control of transmitting the drive force to the left and right drive wheels.

### Solution to Problem

The object indicated above may be achieved according to the present invention, which provides a drive force control apparatus for a vehicle, having at least one engaging element and configured to implement drive force control to control transmitting of a drive force generated by a drive power source, to left and right drive wheels by controlling an engaged state of the at least one engaging element in accordance with a demand for control of the drive force, is characterized in that possibility that the demand for control of the drive force is made is determined on the basis of a predetermined standard, and if it is determined that it is possible that the demand for control would be made, preliminary control to control the engaged state of the at least one engaging element is implemented to a stage prior to implementing of the drive force control.

### Advantageous Effects of Invention

The aforementioned invention provides the drive force control apparatus for a vehicle, wherein the possibility that the demand for the drive force control is made is determined on the basis of the predetermined standard, and if it is determined that it is possible that the demand for control would be made, the preliminary control to control the engaged states of the engaging elements is implemented to the stage prior to implementing of the drive force control. Consequently, the drive force control is implemented with superior responsiveness upon the real demand for control.

Preferably, the aforementioned preliminary control controls the engaged states of the engaging elements such that the torque transmitting capacity is lower than that in the drive force control. Then the drive force control is implemented with superior responsiveness upon the real demand for control by the preliminary control of the practical embodiment.

Preferably, the aforementioned preliminary control controls the engaged states of fewer engaging elements than engaging elements in the drive force control. Then the drive force control is implemented with superior responsiveness upon the real demand for control by the preliminary control of the practical embodiment.

Preferably, the aforementioned drive force control is the differential limitation control that limits the differential control of the left and right drive wheels, and the predetermined standard is whether the vehicle speed is equal to or lower than the predetermined one. Then the responsiveness can be improved in the practical embodiment, with respect to the differential limitation control of the left and right drive wheels.

Preferably, the aforementioned drive force control is the drive force distributing control that distributes the drive force to the left and right drive wheels in a predetermined ratio, and the predetermined standard is whether the vehicle is turning. Then the responsiveness can be improved in the practical embodiment, with respect to the drive force distributing control to the left and right drive wheels.

### BRIEF DESCRIPTION OF DRAWINGS

Fig. 1 is the schematic view for explaining a system of a front- and rear-wheel drive vehicle which is typical front-engine and front-wheel-drive, and is provided with a drive force transmitting apparatus to which the present invention is applicable.
Fig. 2 is the schematic view for explaining a system of the drive force distributing device provided in the drive force transmitting apparatus of Fig. 1.
Fig. 3 is a collinear chart indicating rotating speeds of the rotating elements in the drive force distributing device of Fig. 2 upon noncontrolling.
Fig. 4 is a collinear chart indicating rotating speeds of the rotating elements in the drive force distributing device of Fig. 2 upon left and right wheel torque difference control.
Fig. 5 is a collinear chart indicating rotating speeds of the rotating elements in the drive force distributing device of Fig. 2 upon left and right wheel torque difference control.
Fig. 6 is a collinear chart indicating rotating speeds of the rotating elements in the drive force distributing device of Fig. 2 upon differential limitation control.
Fig. 7 is a table indicating engaged states of the engaging elements in the preliminary control of the drive force control by the drive force distributing controller provided in the vehicle in Fig. 1.
Fig. 8 is a flowchart explaining a major part of the drive force distributing preliminary control by the aforementioned drive force distributing controller provided in the vehicle in Fig. 1.

### REFERENCE SIGNS LIST

- 12:: Engine (Drive power source)
- 30:: Rear wheels (Drive wheels)
- B:: Brake (Engaging element)
- C1:: First clutch (Engaging element)
- C2:: Second clutch (Engaging element)

### DESCRIPTION OF EMBODIMENTS

Referring to the drawings, there will be described in detail a preferred embodiment of the present invention.

### Examples

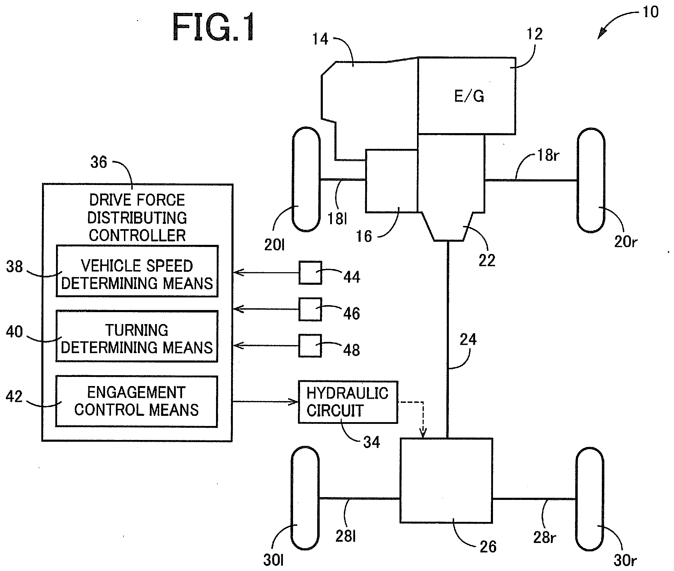

Referring to the schematic view of Fig. 1 for explaining a system of a front- and rear-wheel drive vehicle which is a typical front-engine and front-wheel-drive (FF) one, and is provided with a drive force transmitting apparatus 10 to which the present invention is applicable. As shown in Fig. 1, a drive force (torque) generated by a drive power source in the form of an engine 12 is transmitted to a pair of front wheels 20l, 20r (hereinafter, referred to "front wheels 20" where it is not specified) at left and right sides, respectively, through an automatic transmission 14, a differential gear set 16 for front wheels and a pair of front wheel axles 181, 18r (hereinafter, referred to "front wheel axles 18" where it is not specified) at left and right sides, respectively. And the drive force is also transmitted to a pair of rear wheels 301, 30r (hereinafter, referred to "rear wheels 30" where it is not specified) at left and right sides, respectively, through a central differential gear set (center diff.) 22, a drive force transmitting shaft in the form of a propeller shaft 24, a drive force distributing device 26 and a pair of rear wheel axles 28l, 28r (hereinafter, referred to "rear wheel axles 18" where it is not specified) at left and right sides, respectively. Fig. 1 illustrates the drive force transmitting apparatus 10 in which rotating axes of the rear wheels 30, that is, drive wheels to which the drive force is distributed by the drive force distributing device 26, and of the propeller shaft 24 are perpendicularly disposed to each other. Furthermore, the drive force transmitting apparatus 10 is provided with a hydraulic circuit 34 for controlling such as a hydraulic pressure to control an engaged state of an engaging element provided in the drive force distributing device 26, and a drive force distributing controller 36 for controlling such as a hydraulic pressure supplied from the hydraulic circuit 34 into the drive force distributing device 26, through such as an electromagnetic control valve (not shown) provided in the hydraulic circuit 34. In Fig. 1 a path of a hydraulic pressure output from the hydraulic circuit 34 is represented by a thin broken line with an arrow, and each path of a control signal (control command) output from the controller 36 and each input signal from various sensors is represented by a thin solid line with an arrow.

The engine 12 is, for instance, an internal combustion engine such as a gasoline engine or diesel engine which generates a drive force by combustion of a fuel injected into a cylinder. The aforementioned automatic transmission 14 is, for instance, a step-variable automatic transmission which converts a torque input from the engine 12 into a converted torque by a predetermined speed ratio γ in a shifting-down or shifting-up action and outputs the converted torque. The automatic transmission 14 selectively establishes one of forward, rearward or neutral gear positions, and changes the vehicle speed by conversion in accordance with the respective speed ratio γ. An input shaft of the automatic transmission 14 is connected to an output shaft of the engine 12 through such as a torque converter (not shown).

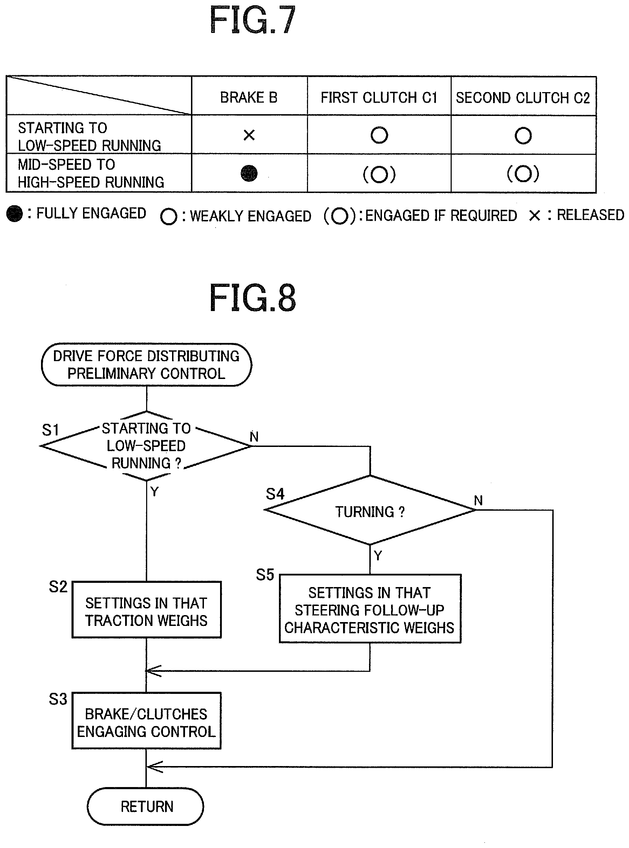

The aforementioned drive force distributing controller 36 includes such as a CPU, ROM, RAM and input/output interface, and is a microcomputer which implements signal processing in accordance with programs stored in the ROM utilizing the temporary storage function of the RAM. For instance, the controller 36 implements such as differential limitation control or yaw control as described below by controlling a hydraulic pressure supplied to the engaging element provided in the drive force distributing device 26, by controlling a commanded value of a current supplied to the electromagnetic control valve provided in the hydraulic circuit 34. In order to implement these controls, the controller 36 is functionally provided with a vehicle speed determining means 38, a turning determining means 40 and an engagement control means 42. These control functions will be described below by reference to such as the flowchart in Fig. 8. The drive force transmitting apparatus 10 is provided with various sensors such as a wheel rotating speed sensor 44 for detecting a real rotating speed of the rear wheels 30 corresponding to the vehicle speed, a steering angle sensor 46 for detecting a steering angle of a steering wheel (not shown), and an accelerator operation amount sensor 48 for detecting an operation amount of an accelerator pedal (not shown) corresponding to a depressed amount. The drive force distributing controller 36 receives such as a signal indicative of the vehicle speed, a signal indicative of the steering angle of the steering wheel and a signal indicative of the operation amount of the accelerator pedal from these sensors.

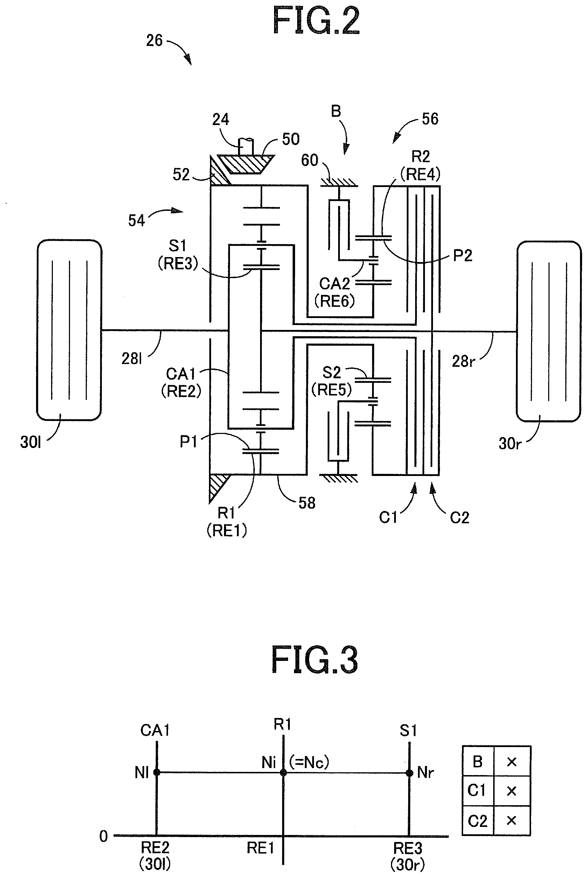

Referring to the schematic view of Fig. 2 for illustrating an example of the aforementioned drive force distributing device 26, the device 26 is, for instance, provided with a bevel gear 50 connected to an end portion of the propeller shaft 24 that is rotatably driven by the engine 12 through the central differential gear set 22, and a bevel gear 52 that is meshed with the bevel gear 50, and the device 26 is constituted such that the drive force is input from the propeller shaft 24 through a set of the bevel gears 50, 52. Further, the drive force distributing device 26 is provided with a differential device 54 for distributing the transmitted drive force from the propeller shaft 24 through the bevel gears 50, 52, to the left and right rear wheels 301, 30r, a transmission device 56 disposed adjacent to the differential device 54 and such that its axis is coaxial with that of the rear wheel axles 28l, 28r, and engaging elements in the forms of a first and second clutches C1, C2 for selectively transmitting an output from the transmission device 56 to the differential device 54.

The aforementioned differential device 54 is a planetary gear set of a double pinion type including a first rotating element RE1 in the form of a ring gear R1, a plurality of pairs of pinions P1 meshing with each other, a second rotating element RE2 in the form of a carrier CA1 supporting the pinions P1 such that each pinion is rotatable about its axis and about the axis of the carrier CA1, and a third rotating element RE3 in the form of a sun gear S1 meshing with the ring gear R1 through the aforementioned plurality of pairs of pinions P1. The gear ratio ρ (= Number of teeth of sun gear S1 / Number of teeth of ring gear R1) is determined, for instance, such that it corresponds to 0.5. The ring gear R1 is integrally fixed to a casing 58 of the differential device 54 within the casing 58, and a torque of the propeller shaft 24 is transmitted to the ring gear R1 such that the rotating speed of the propeller shaft 24 is reduced by the bevel gears 50, 52. The carrier CA1 is connected to the left rear wheel 301 through the left rear wheel axle 281, and the sun gear S1 is connected to the right rear wheel 30r through the right rear wheel axle 28r. The second rotating element RE2 and the third rotating element are exchangeable in both of this and the aftermentioned examples.

The aforementioned transmission device 56 is provided with a planetary gear set of a single pinion type including a fifth rotating element RE5 in the form of a sun gear S2, a pinion P2, a sixth rotating element RE6 in the form of a carrier CA2 supporting the pinion P2 such that each pinion is rotatable about its axis and about the axis of the carrier CA2, and a fourth rotating element RE4 in the form of a ring gear R2 meshing with the sun gear S2 through the aforementioned pinion P2. The fifth rotating element RE5 is connected to the first rotating element RE1 and functions as an input member of the transmission device 56. The sixth rotating element RE6 is connected to an engaging element for switching a torque transmitting path in the form of a brake B, and is selectively connected to an unrotatable member 60 through the brake B. The fourth rotating element RE4 functions as an output member of the transmission device 56. The fourth rotating element RE4 is selectively slippably engaged with the second rotating element RE2 in the form of the carrier CA1 in the differential device 54 and the left rear wheel axle 281, through the first clutch C1, and, concurrently, selectively slippably engaged with the third rotating element RE3 in the form of the sun gear S1 in the differential device 54 and the right rear wheel axle 28r, through the second clutch C2. Preferably, the brake B, first clutch C1 and second clutch C2 are multi-plated frictional engaging devices that are configured to slippably engage. They are engaged or released by a hydraulic pressure output from the hydraulic circuit 34 that is controlled in accordance with a control command output from the drive force distributing controller 36, and, concurrently, a transmitted torque upon a slipping engagement is controlled by implementing hydraulic control if required.

Referring back to Fig. 1, the engagement control means 42 provided in the drive force distributing controller 36 implements drive force control to control transmitting the drive force generated by the engine 12 to the left and right rear wheels 301, 30r, by controlling respective engaged states of the engaging elements in the forms of the first clutch C1, second clutch C2 and brake B, through the hydraulic circuit 34. The drive force generated by the engine 12 is transmitted to the differential device 54 to rotatably drive the casing 58, through such as the automatic transmission 14, the central differential gear set 22 and the propeller shaft 24. The ring gear R1 of the differential device 54 is provided integral to the casing 58, and, accordingly, the drive force from the propeller shaft 24 is input to the differential device 54 through the ring gear R1 and, sequentially, an input member in the form of the casing 58. The engagement control means 42 controls the engaging elements in the form of the first clutch C1, second clutch C2 and brake B, to place each of them in an engaged, slippably engaged or released state, by controlling hydraulic pressures supplied from the hydraulic circuit 34 to the respective engaging elements, through such as an electromagnetic control valve (not shown) provided in the hydraulic circuit 34. Thus, the control of the respective engaged/released states of the first clutch C1, second clutch C2 and brake B permits the control of distribution of the drive force input to the differential device 54 to the left and right rear wheels 30l, 30r. Hereinafter, there will be detailed the distribution of the drive force to the left and right rear wheels 30l, 30r by the drive force distributing device 26.

Reference is now made to the collinear charts of Figs. 3 to 6 indicating rotating speeds of a plurality of the rotating elements in the differential device 54 in the drive force distributing device 26. In these collinear charts, the rotating speed N1 of the second rotating element RE2 in the form of the carrier CA1 connected to the left rear wheel 301 is taken along the left vertical axis, the rotating speed Nr of the third rotating element RE3 connected to the right rear wheel 30r is taken along the right vertical axis, and the rotating speed Nc of the fourth rotating element RE4 and the rotating speed Ni of the first rotating element RE1 in the form of the ring gear R1 integrally rotatable to the casing 58 is taken along the central vertical axis. Tables at the right of the collinear charts show the engaged/released states of the brake B, first clutch C1 and second clutch C2, where shown are "O" indicative of the engaged state and "X" indicative of the released state. The connecting line between the points of the rotating speeds Nl and Nc indicates the state of the first clutch C1, where shown are a solid line indicative of the slippably engaged state and a broken line indicative of the released state. As well, the connecting line between the points of the rotating speeds Nc and Nr indicates the state of the second clutch C2, where shown are a solid line indicative of the slippably engaged state and a broken line indicative of the released state.

Fig. 3 illustrates the collinear chart of the drive force distributing device 26 upon noncontrolling. The drive force distributing device 26 upon noncontrolling places the engaging elements in the forms of the brake B, first clutch C1 and second clutch C2 all in the released states. In this state, only the differential device 54 functions and the transmission device 56 is placed in an drag state, and accordingly, the drive force is equally distributed to the left and right rear wheels 301, 30r. Consequently, no change of the torque transmitting path and no differential limitation are implemented in the drive force distributing device 26, and the device 26 functions as a conventional open differential one. Upon forwarding straight, as shown in Fig. 3, the differential device 54 is integrally rotated and, accordingly, the numbers Nl and Nr of rotation of the left and right rear wheels 301 and 30r, respectively, are substantially equal to each other.

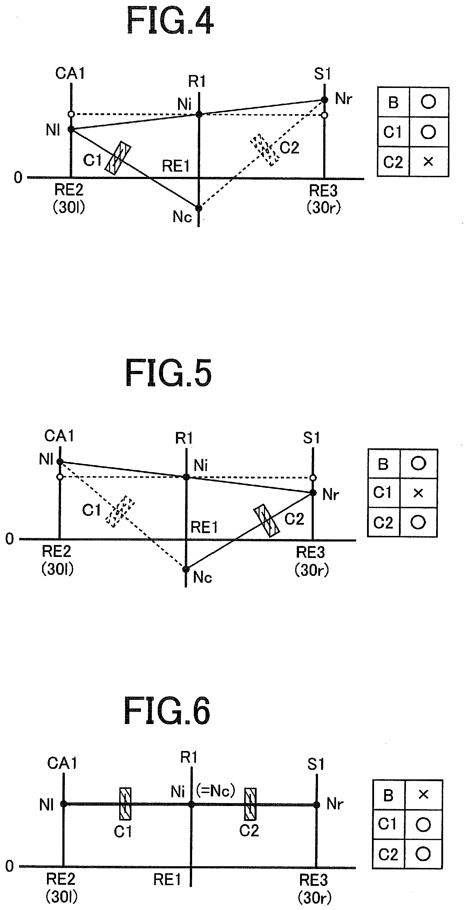

Fig. 4 illustrates an example of the collinear chart upon yaw-controlling, that is, upon left and right wheel torque difference control. It is a collinear chart in the state that the drive force of the right rear wheel 30r is increased, for instance, in turning to the left, to restrain understeering. In this example in Fig. 4, the brake B is engaged, the first clutch C1 is slippably engaged and the second clutch C2 is released concurrently. The engagement of the brake B permits fixation of the carrier CA2 in the transmission device 56, the number Nc of rotation of the fourth rotating element RE4 is reduced in the reverse direction and output. The slippable engagement of the first clutch C1 permits transmitting of an output of the fourth rotating element RE4 to the second rotating element RE2. Since the number Nc of rotation of the fourth rotating element RE4 is reduced in the reverse direction, the drive force of the left rear wheel 301 is reduced by the slippable engagement of the first clutch C1, while the drive force of the right rear wheel 30r is relatively increased. Since the number Nl of rotation of the left rear wheel 301 is reduced by the slippable engagement, the number of rotation of the right rear wheel 30r is increased by the differential device 54.

As shown in Fig. 5, increasing of the drive force of the left rear wheel 301, for instance, in turning to the right, permits to restrain understeering. In the example in Fig. 5, the brake B is engaged, the second clutch C2 is slippably engaged and the first clutch C1 is released concurrently. As well as the example in Fig. 4, the engagement of the brake B permits fixation of the carrier CA2 in the transmission device 56, the number Nc of rotation of the fourth rotating element RE4 is reduced in the reverse direction and output. The slippable engagement of the second clutch C2 permits transmitting of an output of the fourth rotating element RE4 to the third rotating element RE3. Since the number of rotation of the fourth rotating element RE4 is reduced in the reverse direction, the drive force of the right rear wheel 30r is reduced by the slippable engagement of the second clutch C2, while the drive force of the left rear wheel 301 is relatively increased. Since the number Nr of rotation of the right rear wheel 30r is reduced by the slippable engagement, the number of rotation of the left rear wheel 301 is increased by the differential device 54.

Fig. 6 illustrates a collinear chart upon differential limitation control, where the brake B is released and concurrently the first and second clutches C1, C2 are engaged. Thus, the concurrent engagement of both the first and second clutches C1, C2 causes limitation of the relative rotation of the left and right rear wheel axles 281, 28r, and, it causes the differential limitation of the left and right rear wheels 301, 30r. When the first and second clutches C1, C2 are fully engaged, the drive force distributing device 56 functions as a non-slipping differential one, and, accordingly, the left and right rear wheels 301, 30r rotate in the same rotating speed. The differential limitation force can be determined at discretion, being proportional to the clutch control torque.

Referring back to Fig. 1, the aforementioned engagement control means 42 determines the possibility that a demand for the drive force control, that is, the transmitting control of the drive force to the left and right rear wheels 301, 30r would be made on the basis of a predetermined standard. If the means 42 determines that it is possible that the demand for control would be made, the means 42 implements preliminary control to control the engaged states of the engaging elements, that is, the brake B, first clutch C1 and second clutch C2, to a stage prior to implementing of the drive force control. The vehicle speed determining means 38 and turning determining means 40 function as a control demand determining means to determine whether it is possible that the demand for control due to the preliminary control would be made. The vehicle speed determining means 38 determines whether a value of the vehicle speed is lower than a predetermined one, on the basis of a signal representing the vehicle speed supplied from the wheel rotating speed sensor 44. The turning determining means 40 determines whether the vehicle is turning, on the basis of a signal representing the steering angle supplied from the steering angle sensor 46.

The engagement control means 42 implements preliminary control to control the engaged state of the engaging elements provided in the drive force distributing device 26, to a stage prior to implementing of the differential limitation control to limit the differential control of the left and right rear wheels 301, 30r if it is determined that it is possible that the demand for the drive force control, corresponding to the differential limitation control would be made, that is, if the determination by the vehicle speed determining means 38 is affirmative. Described in detail, the respective engaged states of the engaging elements, that is, the first and second clutches C1, C2 affecting the differential limitation control, is controlled such that a torque transmitting capacity is lower than that in the differential limitation control. This torque transmitting capacity upon the preliminary control, preferably, corresponds to a compressed force to advance the piston for engaging the engaging elements to a position that the piston compresses the frictional plate, that is, a compressed force to achieve the movement to eliminate backlashes, and hydraulic pressures supplied to hydraulic actuators of the first and second clutches C1, C2 are controlled such that possibly higher torque transmitting capacity is achieved within the limitation that the effects on the differential states of the left and right rear wheels 301, 30r are disregardable. In the preliminary control of the differential limitation control, the brake B is not controlled and remains released.

The engagement control means 42 implements preliminary control to control the engaged state of the engaging elements provided in the drive force distributing device 26, to a stage prior to implementing of the left-and-right-wheels torque difference control (yaw control) of the left and right rear wheels 301, 30r if it is determined that it is possible that the demand for the drive force control corresponding to the torque difference control (yaw control) of the left and right rear wheels 301, 30r would be made, that is, if the determination by the turning determining means 40 is affirmative. Described in detail, fewer engaging elements that are selected from the engaging elements, that is, the brake B, first clutch C1 and second clutch C2 affecting the left-and-right-wheels torque difference control, than engaging elements upon the left-and-right-wheels torque difference control, for instance, only the brake B is fully engaged. In this preliminary control of the left-and-right-wheels torque difference control, the engaged states of the first and second clutches C1, C2 are not necessary to control, however, as described above, engagement control to achieve the movement to eliminate backlashes of the first and second clutches C1, C2 may be implemented.

The vehicle speed determining means 38, preferably, determines whether the vehicle speed is higher than a predetermined one (different from a determination standard in the preliminary control of the differential limitation control), and the engagement control means 42 may implement the preliminary control of the left-and-right-wheels torque difference control as described above if the determination by the vehicle speed determining means 38 is affirmative.

Fig. 7 is a table indicating engaged states of the engaging elements in the preliminary control by the engagement control means 42. As shown in Fig. 7, in the preliminary control of the present embodiment, the first and second clutches C1, C2 are placed in a relatively weakly engaged state, that is, the engaged state in which the movement to eliminate backlashes is achieved, upon starting to low-speed running of the vehicle. Upon running straight such as when starting to low-speed running, a traction performance is often required and the demand for the differential limitation control is often output, then, the achievement of the movement to eliminate backlashes in advance permits to reduce the duration from the output of the real demand for control to the starting of the substantive engagement control of the engaging elements, and, accordingly, permits to improve responsiveness of the differential limitation control. As shown in Fig. 7, in the preliminary control of the present embodiment, the brake B is fully engaged upon the mid-speed to high-speed running of the vehicle. Upon the mid-speed to high-speed running of the vehicle, steering follow-up characteristic is often required and the demand for the left-and-right-wheels torque difference control (yaw control) is often output, then, the full engagement of the brake B permits to reduce the duration from the output of the real demand for control to the completion of the substantive engagement of the engaging elements, and, accordingly, permits to improve responsiveness of the left-and-right-wheels torque difference control.

The flowchart of Fig. 8 illustrates a major part of the drive force distributing preliminary control by the aforementioned drive force distributing controller 36, and this control routine is repeatedly executed in a predetermined cycle.

The control routine is initiated with step S1 (hereinafter, "step" being omitted) corresponding to the action of the vehicle speed determining means 38, to determine whether the vehicle speed is equal to or lower than a predetermined one, on the basis of the signal indicative of the vehicle speed supplied from the wheel rotating speed sensor 44. If a negative determination is obtained in S1, the control flow goes to S4, otherwise, it goes to S2 in which the settings for controlling the engaged states of the engaging elements in the drive force distributing device 26 are determined such that traction weighs, and it goes to S3 corresponding to the action of the engagement control means 42 in which the preliminary control of the engaged states of the engaging elements in the drive force distributing device 26 is implemented. Concretely, the engagement control to achieve the movement to eliminate backlashes of the first and second clutches C1, C2 is implemented, and, then, this routine is terminated. S4 corresponding to the action of the turning determining means 40, to determine whether the vehicle is turning, is executed on the basis of the signal indicative of the steering angle supplied from the steering angle sensor 46. If a negative determination is obtained in S4, this routine is terminated, otherwise, the control flow goes to S5 in which the settings for controlling the engaged states of the engaging elements in the drive force distributing device 26 are determined such that steering follow-up characteristic weighs, and it goes to S3 in which the preliminary control of the engaged states of the engaging elements in the drive force distributing device 26 is implemented. Concretely, the brake B is fully engaged, and, then, this routine is terminated.

Thus, according to the present embodiment, the possibility that the demand for the drive force control is made is determined on the basis of the predetermined standard, and if it is determined that it is possible that the demand for control would be made, the preliminary control to control the engaged states of the engaging elements, that is, the brake B, first clutch C1 and second clutch C2 is implemented to the stage prior to implementing of the drive force control. Consequently, the drive force control is implemented with superior responsiveness upon the real demand for control. Accordingly, the drive force control apparatus for a vehicle configured to improve responsiveness in control of transmitting the drive forces to the left and right drive wheels can be provided.

Since the aforementioned preliminary control controls the engaged states of the brake B, first clutch C1 and second clutch C2 such that the torque transmitting capacity is lower than that in the drive force control, the drive force control is implemented with superior responsiveness upon the real demand for control by the preliminary control of the practical embodiment.

Since the aforementioned preliminary control controls the engaged states of fewer engaging elements that are selected from the brake B, first clutch C1 and second clutch C2 than engaging elements in the drive force control, the drive force control is implemented with superior responsiveness upon the real demand for control by the preliminary control of the practical embodiment.

Since the aforementioned drive force control is the differential limitation control that limits the differential control of the left and right rear wheels 301, 30r and the predetermined standard is whether the vehicle speed is equal to or lower than the predetermined one, the responsiveness can be improved in the practical embodiment, with respect to the differential limitation control of the left and right rear wheels 301, 30r.

Since the aforementioned drive force control is the drive force distributing control that distributes the drive force to the left and right rear wheels 301, 30r in a predetermined ratio and the predetermined standard is whether the vehicle is turning, the responsiveness can be improved in the practical embodiment, with respect to the drive force distributing control to the left and right rear wheels 301, 30r.

While the preferred embodiment of this invention has been described above in detail by reference to the drawings, it is to be understood that the invention may be otherwise embodied.

For instance, in the aforementioned embodiment, the engagement control means 42 implements the preliminary control of the differential limitation control when the determination by the vehicle speed determining means 38 is affirmative, that is, when it is determined that the vehicle speed is equal to or lower than the predetermined one. And the present invention may be applied to other embodiments, and, for example, after it is determined whether it is starting of the vehicle on the basis of the signal indicative of the accelerator operation amount supplied from the accelerator operation amount sensor 48, if the determination is affirmative, the preliminary control of the differential limitation control may be implemented. Not only the example of the standard indicated in the aforementioned embodiment but various standards determined on the basis of the signals supplied from the various sensors may be available for a determination standard for implementing the preliminary control of the drive force control.

In the aforementioned embodiment, the example is detailed in which such as the drive force distributing device 26 is applied to the front- and rear-wheels drive vehicle that is a fundamentally front-engine front-wheel-drive vehicle. The drive force control device is properly applicable to various vehicles such as a front-engine front-wheel-drive (FF) vehicle, a front-engine rear-wheel-drive (FR) vehicle or a front- and rear-wheel-drive vehicle that is a fundamentally front-engine rear-wheel-drive vehicle.

In the aforementioned embodiment, the example is detailed in which the present invention is applied to the vehicle that is provided with an internal combustion engine such as a gasoline or diesel engine for the drive power source, and this invention may be properly applied to a vehicle provided with another drive power source such as an electric motor.

In the aforementioned embodiment, the transmission device 56 is constituted of one planetary gear set or two planetary gear sets, and, furthermore, various transmission devices such as a structure including more than two planetary gear sets or a structure including a double-pinion type and a single-pinion type planetary gear sets may be applied. A planetary gear set having connection relationship among the sun gear, carrier and ring gear that is optionally changed without inconsistency may be applied, and one having the position of the brake B changed without inconsistency may be applied.

In the aforementioned embodiment, the drive force distributing controller 36 selectively implements the left-and-right-wheel torque difference control or differential limitation control in accordance with the signals supplied from the various sensors, that is, the running state of the vehicle, and, furthermore, a structure in which any of those controls is selected by an operator with using such as a switch may be applied.

In the aforementioned embodiment, the differential device 54 includes the double-pinion type planetary gear set, and a differential device including a single-pinion type planetary gear set may be applied.

In the left-and-right-wheel torque difference control of the aforementioned embodiment, the brake B is fully engaged, and a structure may be applied in which the engagement control means 42 controls the engaged state of the brake B such that the brake B is placed in a semi-engaged state in the left-and-right-wheel torque difference control and its preliminary control because the semi-engaged brake B permits the left-and-right-wheel torque difference control.

In the aforementioned embodiment, the engaged elements, that is, the first clutch C1, second clutch C2 and brake B provided with the drive force distributing device 26 are all hydraulic frictional engaging devices, and other types of clutches and brakes such as a magnetic particle type clutch or an electromagnetic clutch are available.

It is to be understood that the present invention may be embodied with other changes, improvements, and modifications that may occur to a person skilled in the art without departing from the scope of the invention defined in the appended claims.

## Claims

1. A drive force control apparatus (36) for a vehicle, having at least one engaging element (B, C1, C2) and configured to implement drive force control to control distribution of a drive force generated by a drive power source (12), to left drive wheel (301) and to a right drive wheel (30r) by controlling an engaged state of the at least one engaging element in accordance with a demand for control of the drive force, the drive force control apparatus being **characterized by** comprising:
control demand determining means (38, 40) configured to determine a possibility that the demand for control of the drive force is made, based on a predetermined standard, and
engagement control means (42) configured to implement preliminary control, the preliminary control being configured to control the engaged state of the at least one engaging element to a stage prior to implementing of the drive force control if the control demand determining means (38, 40) determined that it is possible that the demand for control would be made.

2. The drive force control apparatus (36) of claim 1, wherein the preliminary control is configured to control the engaged state of the at least one engaging element (B, C1, C2) such that a torque transmitting capacity is lower than that in the drive force control.

3. The drive force control apparatus (36) of claim 1, wherein the preliminary control is configured to control the engaged states of fewer engaging elements that are selected from the at least one engaging elements (B, C1, C2) that engaging elements in the drive force control.

4. The drive force control apparatus (36) of any one of claims 1 to 3, wherein the drive force control is a differential limitation control that is configured to limit differential control of the left and right drive wheels (30), and the predetermined standard is whether the vehicle speed is equal to or lower than a predetermined speed.

5. The drive force control apparatus (36) of any one of claims 1 to 3, wherein the drive force control is a drive force distributing control that is configured to distribute the drive force to the left and right drive wheels (30) in a predetermined ratio, and the predetermined standard is whether the vehicle is turning.

## Patentansprüche

1. Antriebskraftsteuerungsapparat (36) für ein Fahrzeug, das mindestens ein Eingreifelement (B, C1, C2) hat und konfiguriert ist, um eine Antriebskraftsteuerung umzusetzen, um eine Verteilung einer Antriebskraft, die durch eine Antriebsleistungsquelle (12) erzeugt wird, an ein linkes Antriebsrad (30l) und an ein rechtes Antriebsrad (30r) durch ein Steuern eines Im-Eingriff-Zustands des mindestens einen Eingreifelements entsprechend einer Forderung nach einer Steuerung der Antriebskraft zu steuern, wobei der Antriebskraftsteuerungsapparat **dadurch gekennzeichnet ist, dass** er aufweist:
Steuerungsforderungsbestimmungsmittel (38, 40), die konfiguriert sind, um eine Möglichkeit, dass die Forderung nach einer Steuerung der Antriebskraft gemacht wurde, basierend auf einem vorgegebenen Standard zu bestimmen, und
Eingriffssteuerungsmittel (42), die konfiguriert sind, um eine vorläufige Steuerung umzusetzen, wobei die vorläufige Steuerung konfiguriert ist, um den Im-Eingriff-Zustand des mindestens einen Eingreifelements in einem Stadium vor einem Umsetzen der Antriebskraftsteuerung zu steuern, falls die Steuerungsforderungsbestimmungsmittel (38, 40) bestimmen, dass es möglich ist, dass die Forderung nach einer Steuerung gestellt werden würde.

2. Antriebskraftsteuerungsapparat (36) von Anspruch 1, wobei die vorläufige Steuerung konfiguriert ist, um den Im-Eingriff-Zustand des mindestens einen Eingreifelements (B, C1, C2) derart zu steuern, dass eine Drehmomentübertragungskapazität niedriger als die in der Antriebskraftsteuerung ist.

3. Antriebskraftsteuerungsapparat (36) von Anspruch 1, wobei die vorläufige Steuerung konfiguriert ist, um die Im-Eingriff-Zustände von weniger Eingreifelementen, die aus dem mindestens einen der Eingreifelemente (B, C1, C2) ausgewählt sind, als Eingreifelemente in der Antriebskraftsteuerung zu steuern.

4. Antriebskraftsteuerungsapparat (36) nach einem der Ansprüche 1 bis 3, wobei die Antriebskraftsteuerung eine Differentialbeschränkungssteuerung ist, die konfiguriert ist, um eine Differentialsteuerung der linken und rechten Antriebsräder (30) zu beschränken, und der vorgegebene Standard ist, ob die Fahrzeuggeschwindigkeit gleich einer vorgegebenen Geschwindigkeit oder niedriger als diese ist.

5. Antriebskraftsteuerungsapparat (36) nach einem der Ansprüche 1 bis 3, wobei die Antriebskraftsteuerung eine Antriebskraftverteilungssteuerung ist, die konfiguriert ist, um die Antriebskraft an die linken und rechten Antriebsräder (30) in einem vorgegebenen Verhältnis zu verteilen, und der vorgegeben Standard ist, ob das Fahrzeug abbiegt.

## Revendications

1. Appareil de commande de force motrice (36) pour un véhicule, ayant au moins un élément d'engagement (B, C1, C2) et configuré pour mettre en oeuvre une commande de force motrice pour commander la distribution d'une force motrice générée par une source d'énergie d'entraînement (12), à une roue motrice gauche (301) et à une roue motrice droite (30r) en commandant un état engagé du au moins un élément d'engagement en fonction d'une demande de commande de la force motrice, l'appareil de commande de force motrice étant **caractérisé en ce qu'**il comporte :
des moyens de détermination de demande de commande (38, 40) configurés pour déterminer une possibilité que la demande de commande de la force motrice soit faite, sur la base d'une norme prédéterminée, et
des moyens de commande d'engagement (42) configurés pour mettre en oeuvre une commande préliminaire, la commande préliminaire étant configurée pour commander l'état engagé du au moins un élément d'engagement à un stade avant la mise en oeuvre de la commande de force motrice si les moyens de détermination de demande de commande (38, 40) ont déterminé qu'il est possible que la demande de commande soit faite.

2. Appareil de commande de force motrice (36) selon la revendication 1, dans lequel la commande préliminaire est configurée pour commander l'état engagé du au moins un élément d'engagement (B, C1, C2) de telle sorte qu'une capacité de transmission de couple est inférieure à celle dans la commande de force motrice.

3. Appareil de commande de force motrice (36) selon la revendication 1, dans lequel la commande préliminaire est configurée pour commander les états engagés de moins d'éléments d'engagement qui sont sélectionnés parmi les au moins un élément d'engagement (B, C1, C2) que les éléments d'engagement dans la commande de force motrice.

4. Appareil de commande de force motrice (36) selon l'une quelconque des revendications 1 à 3, dans lequel la commande de force motrice est une commande de limitation différentielle qui est configurée pour limiter une commande différentielle des roues motrices gauche et droite (30), et la norme prédéterminée concerne le fait que la vitesse de véhicule est égale ou inférieure à une vitesse prédéterminée.

5. Appareil de commande de force motrice (36) selon l'une quelconque des revendications 1 à 3, dans lequel la commande de force motrice est une commande de distribution de force motrice qui est configurée pour distribuer la force motrice aux roues motrices gauche et droite (30) dans un rapport prédéterminé, et la norme prédéterminée concerne le fait que le véhicule tourne.
